(19) Europäisches Patentamt
European Patent Office
Office européen des brevets

(11) **EP 4 664 739 A1**

(12) **EUROPEAN PATENT APPLICATION**

(43) Date of publication:
**17.12.2025 Bulletin 2025/51**

(21) Application number: **25182386.0**

(22) Date of filing: **12.06.2025**

(51) International Patent Classification (IPC):
*H02M 1/00* (2006.01)    *H02M 1/12* (2006.01)
*H02M 1/42* (2007.01)    *H02M 3/00* (2006.01)
*H02M 3/335* (2006.01)

(52) Cooperative Patent Classification (CPC):
**H02M 1/007; H02M 1/0077; H02M 1/12;
H02M 1/4208; H02M 3/01; H02M 3/33571;
H02M 3/33573; H02M 3/33584;** H02M 1/4216

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **13.06.2024 US 202463659599 P**

(71) Applicant: **Delta Electronics, Inc.
Neihu, Taipei 11491 (TW)**

(72) Inventors:
• **Phukan, Ripun
  Morrisville, NC 27560 (US)**
• **Kumar, Misha
  Morrisville, NC 27560 (US)**
• **Barbosa, Peter Mantovanelli
  Morrisville, NC 27560 (US)**

(74) Representative: **Uexküll & Stolberg
Partnerschaft von
Patent- und Rechtsanwälten mbB
Beselerstraße 4
22607 Hamburg (DE)**

(54) **BIDIRECTIONAL AC-DC POWER SUPPLY**

(57)    A bidirectional AC-DC power supply (100) is provided. The bidirectional AC-DC power supply (100) includes a plurality of primary circuits (11, 12, 13), a plurality of transformers (TR1, TR2, TR3), one secondary circuit (2) and a control circuit (3). The plurality of primary circuits (11, 12, 13) are electrically connected to a plurality of phase voltages (V1, V2, V3) of an AC power respectively. The plurality of transformers (TR1, TR2, TR3) are electrically connected to the plurality of primary circuits (11, 12, 13) respectively. A primary winding of each transformer (TR1) is coupled to a corresponding one of the plurality of primary circuits (11), and a plurality of secondary windings of the plurality of transformers (TR1, TR2, TR3) are electrically connected in series. The secondary circuit (2) is electrically connected to the plurality of secondary windings of the plurality of transformers (TR1, TR2, TR3). The control circuit (3) is configured to control switches of the plurality of primary circuits (11, 12, 13) and the secondary circuit (2) to switch under zero voltage by controlling phase shifts of the switches of the plurality of primary circuits (11, 12, 13).

FIG. 2

**Description**

FIELD OF THE APPLICATION

The present disclosure relates to an AC-DC power supply, and more particularly to a bidirectional AC-DC power supply.

BACKGROUND OF THE APPLICATION

Three-phase, single-stage, isolated zero voltage-switching (ZVS) rectifier, with one integrated three-phase AC-DC converter, that achieves less than 5% input-current total harmonic distortion (THD) and provides tightly regulated output voltage has been discussed in references [1], [2] and [3]. In reference [1], the proposed single-stage TAIPEI rectifier employs two feedback control loops. A low bandwidth, below several tens of Hertz (Hz), frequency controlled loop is used to regulate bus voltage and indirectly shape the discontinuous inductor currents to follow the respective phase voltage with low harmonic distortions. A high bandwidth (in the kilohertz (kHz) range) phase-shift control loop is employed to tightly regulate output voltage with negligible rectified line and switching frequency ripple. Frequency modulation for Taipei rectifier stage and phase-shift modulation using a phase shifted DC-DC converter is employed in the overall control strategy. References [2] and [3] use a single-stage isolated Swiss-type AC/DC converter based on a single full-bridge with midpoint-clamper. Both soft switching and the high-frequency galvanic isolation can be achieved at the expense of complicated duty cycle and variable frequency control.

Another category of single-stage power supplies includes a phase modular arrangement, demonstrated in references [4] and [5]. The benefit of phase modular systems lies in its ability to operate under both single and three phase input sources, thereby making it a universal single stage power supply solution. The arrangement leads to simpler control implementation wherein each of the three phase units (AC-DC power supply) behaves like a DC-DC converter with variable input voltage (input grid side phase to neutral voltage). Examples of a pulse width modulation (PWM) type full-bridge-based DC-DC stage in reference [4] and a buck-boost type DC-DC stage in reference [5] are demonstrated in single-stage AC-DC applications. In another case per reference [6], a single-stage high frequency-link three-phase LLC AC-DC converter is proposed. The soft switching commutation can be achieved over the wide range of load power with the assistance of magnetizing current of a high frequency transformer in the LLC topology. However, the efficiency is limited to 93% and input currents to the converter are discontinuous leading to higher losses in the first stage inductor. Reference [7] shows a similar implementation but only under boost mode to achieve ZVS and zero current switching (ZCS) on primary and secondary sides respectively.

The underlying issue with most phase modular single-stage AC-DC power supplies is the high component count and cost. Since independent control of three individual phases is necessary to realize a three-phase modular arrangement, the number of DC-DC stages is typically higher than an integrated three-phase AC-DC solution presented in references [1], [2] and [3].

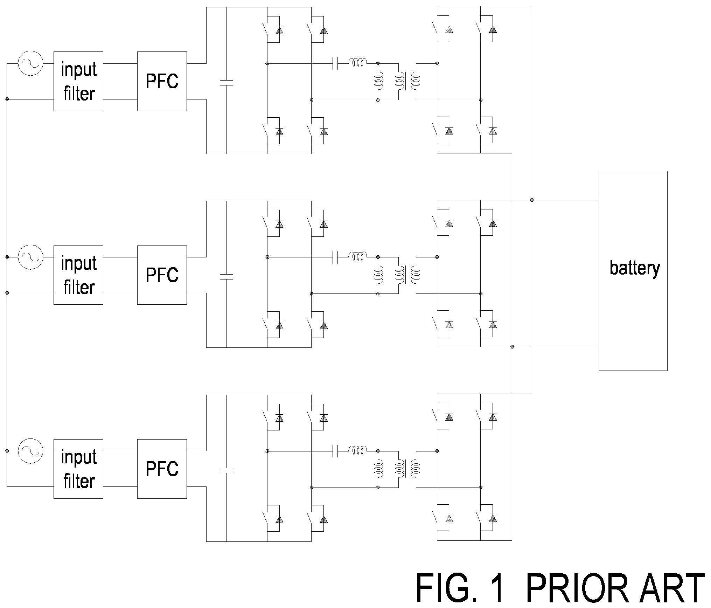

For example, FIG. 1 shows a conventional phase modular single-stage AC-DC power supply using the LLC converter as the high frequency resonant tank. The phase modular single-stage AC-DC power supply using the LLC converter includes three single-phase AC-DC power supplies with dedicated resonant tanks, PFCs and input filters. The secondary sides are combined at the output terminal as a parallel connection. The prime benefits include ripple cancellation and double line frequency component cancellation at the output. By combining the three 120-degree phase-shifted single phases, the double line frequency component is reduced. However, the conventional solution requires several components such as multiple secondary rectifier stages and multiple LLC resonant tanks. Combining all the secondary rectifier stages into one can result in major cost and component count savings. Nevertheless, it cannot be realized for conventional LLC based power supplies as it would lead to loss of phase synchronization (i.e., each phase must function at different switching frequency) and loss of ZVS on either primary or secondary side switches.

References:

[1]Y. Jang, M. M. Jovanovic and J. M. Ruiz, "The single-stage TAIPEI rectifier," 2013 Twenty-Eighth Annual IEEE Applied Power Electronics Conference and Exposition (APEC), Long Beach, CA, USA, 2013, pp. 1042-1049, doi: 10.1109/APEC.2013.6520428.

[2] X. Li, J. Sun, L. Guo, M. Gao, H. Hu and M. Xu, "A Three-Phase Single-Stage ac/dc Converter Based on Swiss Rectifier and Three-Level LLC Topology," in IEEE Transactions on Power Electronics, vol. 38, no. 2, pp. 1958-1972, Feb. 2023, doi: 10.1109/TPEL.2022.3214330.

[3] B. Zhang, S. Xie, Z. Li, P. Zhao and J. Xu, "An Optimized Single-Stage Isolated Swiss-Type AC/DC Converter Based on Single Full-Bridge With Midpoint-Clamper," in IEEE Transactions on Power Electronics, vol. 36, no. 10, pp. 11288-11297, Oct. 2021, doi: 10.1109/TPEL.2021.3073742.

[4] S. Y R. Hui, H. Chung, Y. K. E. Ho and Y. S. Lee, "Modular development of single-stage 3-phase PFC using single-phase step-down converters," PESC 98 Record. 29th Annual IEEE Power Electronics Specialists Conference (Cat. No.98CH36196), Fukuoka, Japan, 1998, pp. 776-782 vol.1, doi: 10.1109/PESC.1998.701987.

[5] D. Menzi, D. Bortis and J. W. Kolar, "A New Bidirectional Three-Phase Phase-Modular Boost-Buck AC/DC Converter," 2018 IEEE International Power Electronics and Application Conference and Exposition (PEAC), Shenzhen, China, 2018, pp. 1-8, doi: 10.1109/PEAC.2018.8590670.

[6] S. -Y Chen, Z. R. Li and C. -L. Chen, "Analysis and Design of Single-Stage AC/DC $LLC$ Resonant Converter," in IEEE Transactions on Industrial Electronics, vol. 59, no. 3, pp. 1538-1544, March 2012, doi: 10.1109/TIE.2011.2161649.

[7] M. Forouzesh, Y. -F. Liu and P. C. Sen, "Implementation of an Isolated Phase-Modular-Designed Three-Phase PFC Rectifier Based on Single-Stage LLC Converter," 2021 IEEE Energy Conversion Congress and Exposition (ECCE), Vancouver, BC, Canada, 2021, pp. 2266-2273, doi: 10.1109/ECCE47101.2021.9595140.

Therefore, there is a need for an alternate bidirectional AC-DC power supply in order to overcome the drawbacks of the conventional technologies.

SUMMARY OF THE APPLICATION

The present disclosure provides a bidirectional AC-DC power supply capable of reducing the component count, compared to the conventional topology, and meanwhile ensuring zero-voltage-switching of all the switches.

In accordance with an aspect of the present disclosure, a bidirectional AC-DC power supply is provided. The bidirectional AC-DC power supply includes a plurality of primary circuits, a plurality of transformers, one secondary circuit and a control circuit. The plurality of primary circuits are electrically connected to a plurality of phase voltages of an AC power respectively. The plurality of transformers are electrically connected to the plurality of primary circuits respectively. A primary winding of each transformer is coupled to a corresponding one of the plurality of primary circuits, and a plurality of secondary windings of the plurality of transformers are electrically connected in series. The secondary circuit is electrically connected to the plurality of secondary windings of the plurality of transformers. The control circuit is configured to control switches of the plurality of primary circuits and the secondary circuit to switch under zero voltage by controlling phase shifts of the switches of the plurality of primary circuits.

The above contents of the present disclosure will become more readily apparent to those ordinarily skilled in the art after reviewing the following detailed description and accompanying drawings, in which:

BRIEF DESCRIPTION OF THE DRAWINGS

FIG. 1 shows a conventional phase modular single-stage AC-DC power supply;

FIG. 2 is a schematic block diagram illustrating a bidirectional AC-DC power supply according to an embodiment of the present disclosure;

FIG. 3A is a schematic circuit diagram illustrating an implementation of the bidirectional AC-DC power supply of FIG. 2 according to an embodiment of the present disclosure;

FIG. 3B, FIG. 3C and FIG. 3D exemplifies variants of the bidirectional AC-DC power supply of FIG. 3A for wider input and output voltage ranges;

FIG. 4A, FIG. 4B and FIG. 4C schematically show operating waveforms of the bidirectional AC-DC power supply of FIG. 3A under the charging mode according to an embodiment of the present disclosure;

FIG. 5 schematically shows operating waveforms of the bidirectional AC-DC power supply of FIG. 3A under the discharging mode according to an embodiment of the present disclosure;

FIG. 6 is a schematic block diagram illustrating the control circuit of the bidirectional AC-DC power supply of FIG. 3A according to an embodiment of the present disclosure;

FIG. 7 is a schematic block diagram illustrating the control circuit of the bidirectional AC-DC power supply of FIG. 3A according to another embodiment of the present disclosure;

FIG. 8A and FIG. 8B schematically show the simulation result of the bidirectional AC-DC power supply of FIG. 3A under the charging mode;

FIG. 9A and FIG. 9B schematically show the simulation result of the bidirectional AC-DC power supply of FIG. 3A under the discharging mode;

FIG. 10 is a schematic circuit diagram illustrating another implementation of the bidirectional AC-DC power supply of FIG. 2 according to an embodiment of the present disclosure; and

FIG. 11A and FIG. 11B schematically show the simulation result of the bidirectional AC-DC power supply of FIG. 10.

## DETAILED DESCRIPTION OF THE PREFERRED EMBODIMENT

The present disclosure will now be described more specifically with reference to the following embodiments. It is to be noted that the following descriptions of preferred embodiments of this disclosure are presented herein for purpose of illustration and description only. It is not intended to be exhaustive or to be limited to the precise form disclosed.

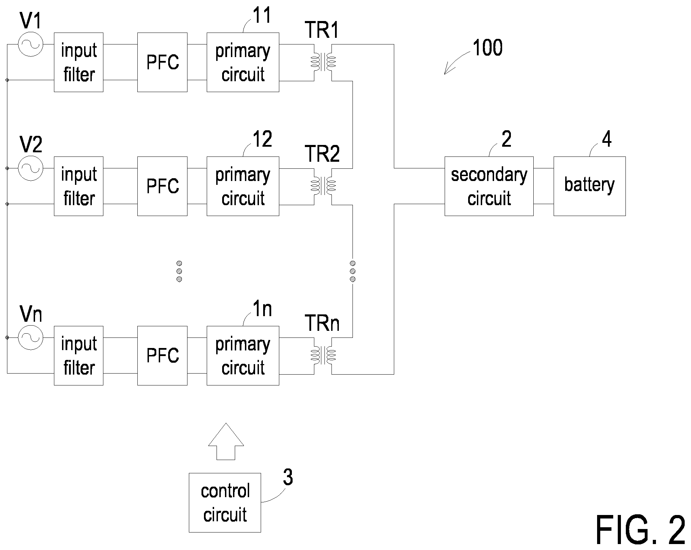

FIG. 2 is a schematic block diagram illustrating a bidirectional AC-DC power supply according to an embodiment of the present disclosure. As shown in FIG. 2, the bidirectional AC-DC power supply 100 includes a plurality of primary circuits 11, 12, ..., 1n, a plurality of transformers TR1, TR2, ..., TRn, one secondary circuit 2, and a control circuit 3, where n is a positive integer greater than or equal to three. The plurality of primary circuits 11-1n are electrically connected to a plurality of phase voltages V1, V2, ..., Vn of an AC power respectively. It is noted that the primary circuits 11-1n, the transformers TR1-TRn, and the phase voltages V1, V2, ..., Vn of the AC power have the same number. The plurality of transformers TR1-TRn are electrically connected to the plurality of primary circuits 11-1n respectively. Each transformer includes a primary winding and a secondary winding, wherein each primary winding is coupled to a corresponding one of the primary circuits, and all the secondary windings are electrically connected in series. The secondary circuit 2 is electrically connected to the secondary windings of the transformers TR1-TRn. Specifically, the secondary circuit 2 is electrically connected to the two ends of the serial-connected secondary windings, namely a terminal of the secondary winding of the first transformer TR1 and a terminal of the secondary winding of the nth transformer TRn. The control circuit 3 is configured to control switches of all the primary circuits 11-1n and secondary circuit 2 to switch under zero voltage by controlling phase shifts of the switches of the plurality of primary circuits 11-1n. In an embodiment, the bidirectional AC-DC power supply 100 is connected between an AC power source, for example but not limited to a power grid, and a battery 4.

Each of the primary circuits 11-1n may be implemented by a suitable converter, such as a full-bridge converter or a stacked half-bridge converter. Similarly, the secondary circuit 2 may be implemented by a suitable converter, such as a full-bridge converter or a stacked half-bridge converter. The full-bridge converter may be used for lower voltage applications, while the stacked half-bridge converter may be used for higher voltage applications with adopting low voltage devices.

It is noted that the bidirectional AC-DC power supply 100 is able to perform bidirectional voltage conversion. During a charging mode, the bidirectional AC-DC power supply 100 receives the AC power by the primary circuits 11-1n and provides a DC power by the secondary circuit 2, the primary circuits 11-1n and the primary windings of transformers TR1-TRn serve as a primary side, and the secondary windings of transformers TR1-TRn and the secondary circuit 2 serve as a secondary side. Conversely, during a discharging mode, the bidirectional AC-DC power supply 100 receives the DC power by the secondary circuit 2 and provides the AC power by the primary circuits 11-1n, the secondary circuit 2 and the secondary windings of transformers TR1-TRn serve as the primary side, and the primary windings of transformers TR1-TRn and the primary circuits 11-1n serve as the secondary side.

In an embodiment, the bidirectional AC-DC power supply 100 further includes a plurality of input filters and a plurality of power factor correctors (PFCs), wherein the input filter and the PFC are electrically connected between each phase voltage of the AC power and the corresponding primary circuit.

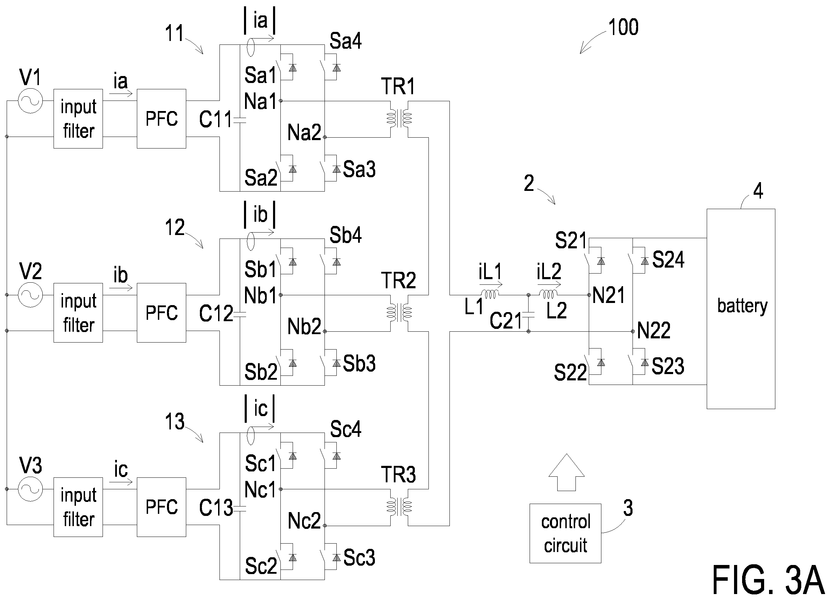

FIG. 3A is schematic circuit diagram illustrating an implementation of the bidirectional AC-DC power supply of FIG. 2 according to an embodiment of the present disclosure. In this embodiment, as shown in FIG. 3A, the bidirectional AC-DC power supply 100 is connected to a three-phase AC power and correspondingly includes three primary circuits 11, 12 and 13 and three transformers TR1, TR2 and TR3.

The primary circuit 11 adopts a full-bridge configuration and includes a capacitor C11, a first switch bridge arm and a second switch bridge arm electrically connected in parallel. The first switch bridge arm is formed by switches Sa1 and Sa2 electrically connected in series, and the second switch bridge arm is formed by switches Sa3 and Sa4 electrically connected in series. A connection node Na1 of the switches Sa1 and Sa2 and a connection node Na2 of the switches Sa3 and Sa4 are electrically connected to two terminals of the primary winding of the corresponding transformer TR1, respectively. The topology of the primary circuits 12 and 13 is similar with that of the primary circuit 11. In particular, the primary circuit 12 includes a capacitor C12, a first switch bridge arm and a second switch bridge arm electrically connected in parallel. In the primary circuit 12, the first switch bridge arm is formed by switches Sb1 and Sb2 electrically connected in series, and the second switch bridge arm is formed by switches Sb3 and Sb4 electrically connected in series. A connection node Nb1 of the switches Sb1 and Sb2 and a connection node Nb2 of the switches Sb3 and Sb4 are electrically connected to two terminals of the primary winding of the corresponding transformer TR2, respectively. The primary circuit 13 includes a capacitor C13, a first switch bridge arm and a second switch bridge arm electrically connected in parallel. In the primary circuit 13, the first switch bridge arm is formed by switches Sc1 and Sc2 electrically connected in series, and the second switch bridge arm is formed by switches Sc3 and Sc4 electrically connected in series. A connection node Nc1 of the switches Sc1 and Sc2 and a connection node Nc2 of the switches Sc3 and Sc4 are electrically connected to two terminals of the primary winding of the corresponding transformer TR3, respectively.

The secondary circuit 2 includes inductors L1 and L2, a capacitor C21, and switches S21, S22, S23 and S24. The inductors L1 and L2 and the capacitor C21 form an LCL-T resonant tank. The switch bridge arm formed by the serial-connected switches S21 and S22 is electrically connected in parallel to the switch bridge arm formed by the serial-connected switches S23 and S24. Two terminals of the inductor L1 are electrically connected to the secondary winding of the transformer TR1 and a first terminal of the capacitor C21 respectively. Two terminals of the inductor L2 are electrically connected to the first terminal of the capacitor C21 and a connection node N21 of the switches S21 and S22. A second terminal of the capacitor C21 is electrically connected to the secondary winding of the transformer TR3 and a connection node N22 of the switches S23 and S24.

Consequently, compared with the conventional topology as exemplified in FIG. 1, the bidirectional AC-DC power supply 100 adopts only one resonant tank and one rectifier stage (i.e., one secondary circuit 2), resulting in significant reduction of component count and cost compared to the state-of-the-art.

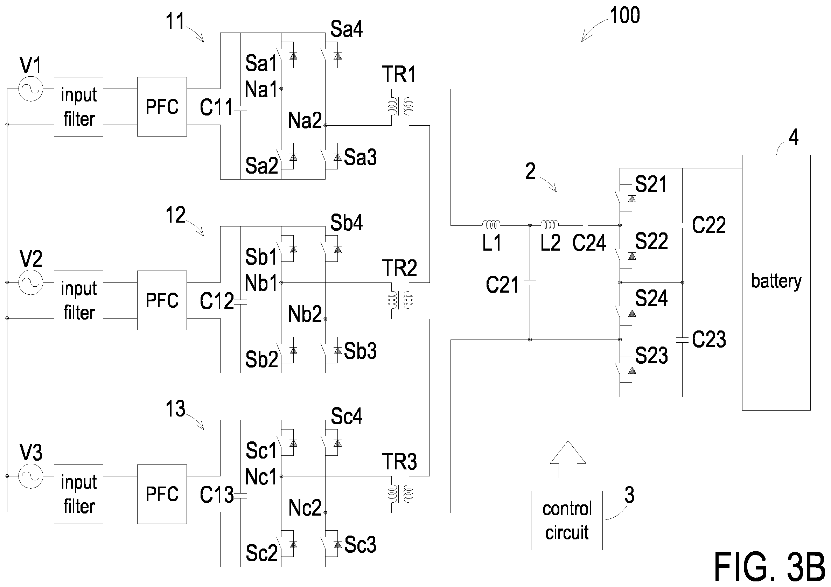

FIG. 3B exemplifies a variant of the bidirectional AC-DC power supply 100 of FIG. 3A. In FIG. 3B, the components parts and elements corresponding to those of FIG. 3A are designated by identical numeral references, and detailed descriptions thereof are omitted herein. In the embodiment shown in FIG. 3B, the switches of the secondary circuit 2 are implemented in a stacked half-bridge configuration. Specifically, the switches S21, S22, S24 and S23 are electrically connected in series sequentially to form a switch bridge arm. In addition, the secondary circuit 2 further includes capacitors C22, C23 and C24. The capacitors C22 and C23 are electrically connected in series to form a capacitor bridge arm which is electrically connected in parallel to the switch bridge arm, and a connection node of the capacitors C22 and C23 is coupled to a connection node of the switches S22 and S24. Further, the capacitor C24 is electrically connected between the inductor L2 and the connection node of the switches S21 and S22.

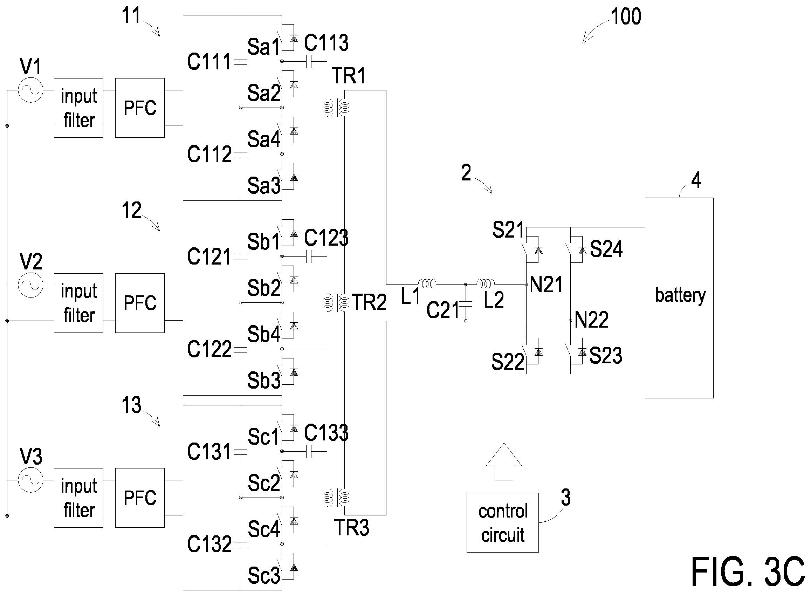

FIG. 3C exemplifies another variant of the bidirectional AC-DC power supply 100 of FIG. 3A. In FIG. 3C, the components parts and elements corresponding to those of FIG. 3A are designated by identical numeral references, and detailed descriptions thereof are omitted herein. In the embodiment shown in FIG. 3C, the switches of each primary circuit are implemented in a stacked half-bridge configuration. Specifically, in the primary circuit 11, the switches Sa1, Sa2, Sa4 and Sa3 are electrically connected in series sequentially to form a switch bridge arm. In addition, the primary circuit 11 includes capacitors C111, C112 and C113. The capacitors C111 and C112 replace the capacitor C11 of FIG. 3A and are electrically connected in series to form a capacitor bridge arm, and the formed capacitor bridge arm is electrically connected in parallel to the switch bridge arm. Further, a connection node of the capacitors C111 and C112 is coupled to a connection node of the switches Sa2 and Sa4. The capacitor C113 is electrically connected between the primary winding of the transformer TR1 and the connection node of the switches Sa1 and Sa2. Similarly, in the primary circuit 12, the switches Sb1, Sb2, Sb4 and Sb3 are electrically connected in series sequentially to form a switch bridge arm. In addition, the primary circuit 12 includes capacitors C121, C122 and C123. The capacitors C121 and C122 replace the capacitor C12 of FIG. 3A and are electrically connected in series to form a capacitor bridge arm, and the formed capacitor bridge arm is electrically connected in parallel to the switch bridge arm. Further, a connection node of the capacitors C121 and C122 is coupled to a connection node of the switches Sb2 and Sb4. The capacitor C123 is electrically connected between the primary winding of the transformer TR2 and the connection node of the switches Sb1 and Sb2. In the primary circuit 13, the switches Sc1, Sc2, Sc4 and Sc3 are electrically connected in series sequentially to form a switch bridge arm. In addition, the primary circuit 13 includes capacitors C131, C132 and C133. The capacitors C131 and C132 replace the capacitor C13 of FIG. 3A and are electrically connected in series to form a capacitor bridge arm, and the formed capacitor bridge arm is electrically connected in parallel to the switch bridge arm. Further, a connection node of the capacitors C131 and C132 is coupled to a connection node of the switches Sc2 and Sc4. The capacitor C133 is electrically connected between the primary winding of the transformer TR3 and the connection node of the switches Sc1 and Sc2.

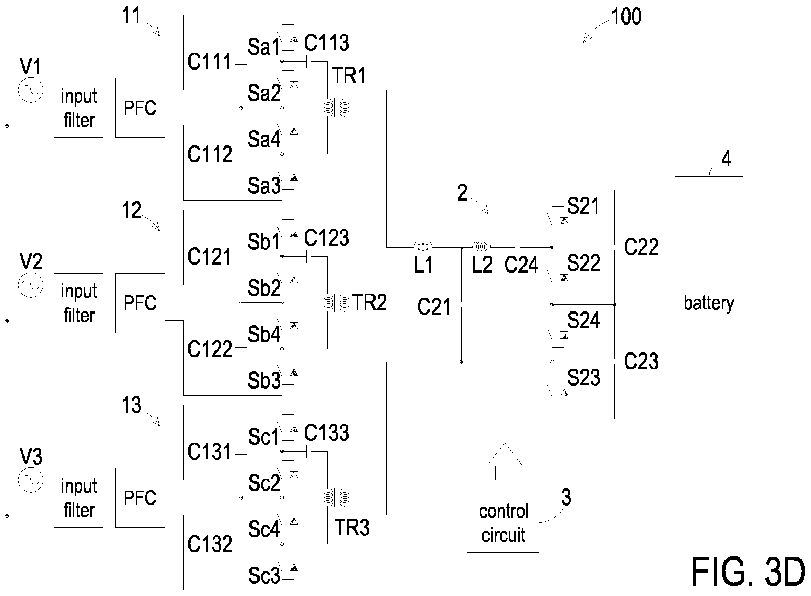

FIG. 3D exemplifies another variant of the bidirectional AC-DC power supply 100 of FIG. 3A. In FIG. 3D, the components parts and elements corresponding to those of FIGS. 3B and 3C are designated by identical numeral references, and detailed descriptions thereof are omitted herein. It is noted that in the embodiment shown in FIG. 3D, the switches of each primary circuit are implemented in a stacked half-bridge configuration, and the switches of the secondary circuit 2 are also implemented in a stacked half-bridge configuration.

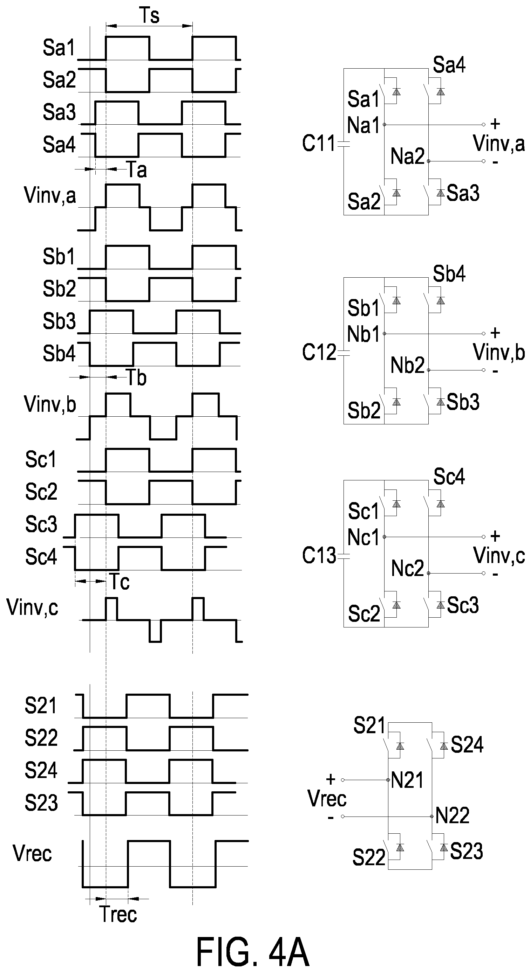

Taking the bidirectional AC-DC power supply of FIG. 3A under the charging mode as an example. FIG. 4A schematically shows waveforms of voltages and switch control signals of the switches of all the primary the secondary circuits of the bidirectional AC-DC power supply of FIG. 3A. In FIG. 4A, Vinv,a represents a voltage across the connection nodes Na1 and Na2, Vinv,b represents a voltage across the connection nodes Nb1 and Nb2, Vinv,c represents a voltage across the connection nodes Nc1 and Nc2, Vrec represents a voltage across the connection nodes N21 and N22, and Ts represents a switching cycle. Please refer to FIG. 4A in conjunction with FIG. 3A. In the primary circuit 11, a phase shift $\varphi a$ is introduced between the switch control signals of switches Sa1 and Sa3 by the control circuit 3, resulting in a time delay Ta between the switch control signals of switches Sa1 and Sa3, where $Ta = \varphi a*Ts/2\pi$. The switch control signal of switch Sa2 is complementary to the switch control signal of switch Sa1, and the switch control signal of switch Sa4 is complementary to the switch control signal of switch Sa3. The said time delay Ta is actually equal to the time that the voltage Vinv,a being at or near zero. Similarly, in the primary circuit 12, a phase shift φb is introduced between the switch control signals of switches Sb1 and Sb3 by the control circuit 3, resulting in a time delay Tb between the rising edges of the switch control signals of switches Sb1 and Sb3, where Tb = φb*Ts/2π. The switch control signal of switch Sb2 is complementary to the switch control signal of switch Sb1, and the switch control signal of switch Sb4 is complementary to the switch control signal of switch Sb3. The said time delay Tb is actually equal to the time that the voltage Vinv,b being at or near zero. In the primary circuit 13, a phase shift φc is introduced between the switch control signals of switches Sc1 and Sc3 by the control circuit 3, resulting in a time delay Tc between the rising edges of the switch control signals of switches Sc1 and Sc3, where Tc = φc*Ts/2π. The switch control signal of switch Sc2 is complementary to the switch control signal of switch Sc1, and the switch control signal of switch Sc4 is complementary to the switch control signal of switch Sc3. The said time delay Tc is actually equal to the time that the voltage Vinv,c being at or near zero. It is noted that the rising edges of the switch control signals of the switches Sa1, Sb1 and Sc1 are synchronous (i.e., a leading-edge synchronization), which is imperative since the current iL1 flowing through the inductor L1 is inherently controlled by only one secondary rectifier stage. Additionally, it is noted that the current direction in FIG. 3A is depicted based on the charging mode, and the current direction would be reversed during the discharging mode.

With regard to the secondary circuit 2, the switch control signals of the switches S21 and S23 are synchronous, the switch control signals of the switches S22 and S24 are synchronous, and the switch control signals of the switches S22 and S24 are complementary to the switch control signals of the switches S21 and S23. Further, a time delay Trec is introduced between the rising edge of the switch control signal of any of the switches Sa1, Sb1 and Sc1 and the rising edge of the switch control signal of the switch S21 by the control circuit 3, where Trec = πTs/2+Δφ. The time delay Trec is used to ensure that there is enough reactive power (i.e., negative current) during turn-on of the switches Sa1, Sb1 and Sc1 so as to achieve ZVS, and Δφ may be determined according to load requirements related to the battery 4. Δφ may change depending upon the load, i.e., for a light load a larger Δφ may be needed and vice and versa.

Due to the leading-edge synchronization during the charging mode, the ZVS of all the switches of the primary circuits 11, 12 and 13 and the secondary circuit 2 across the entire load and voltage range is ensured.

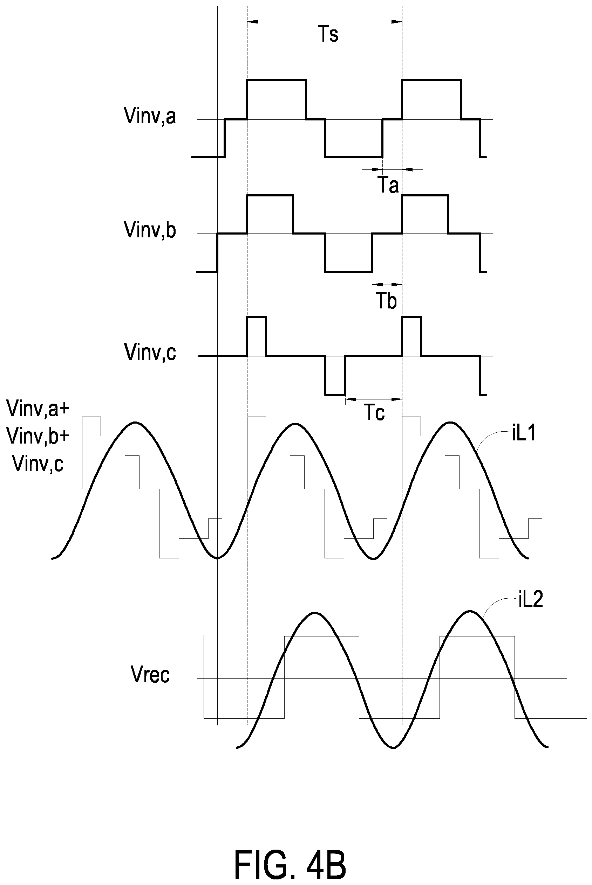

Please refer to FIG. 4B in conjunction with FIG. 3A. In addition to the voltages Vinv,a, Vinv,b, Vinv,c and Vrec shown in FIG. 4A, FIG. 4B further shows the sum of the voltages Vinv,a, Vinv,b, Vinv,c, the current iL1 flowing through inductor L1, and a current iL2 flowing through the inductor L2. The leading-edge synchronization also results in leading current iL2 with respect to the rising edge of the voltage Vrec of the secondary circuit 2. Additionally, due to the leading-edge synchronization, the rising edges of the voltages Vinv,a, Vinv,b, Vinv,c in the positive half cycle are synchronous, and the falling edges of the voltages Vinv,a, Vinv,b, Vinv,c in the negative half cycle are synchronous.

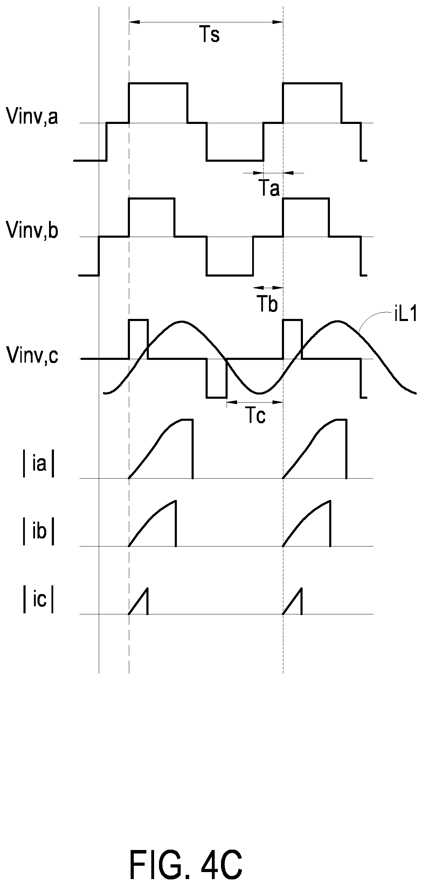

Please refer to FIG. 4C in conjunction with FIG. 3A. In addition to the voltages Vinv,a, Vinv,b and Vinv,c and the current iL1, FIG. 4C further shows the measured current values |ia|, |ib| and |ic| (the absolute current values) of the primary circuits 11, 12 and 13 respectively. It can be seen that the phase with smallest phase shift has the highest current value and delivers the maximum amount of power.

Please refer to FIG. 3A again. In an embodiment, the resonant frequency fr of the resonant tank is set to be the switching frequency fs of the switch circuits, as shown in equation (1).

$$f_r = f_s = \frac{1}{2\pi\sqrt{C_{21}L}}; \ L_1 = L_2 = L \qquad (1).$$

Further, the input current of a primary circuit is related to the number of the phases of AC power, the voltage of the battery 4, the reactance of the resonant tank and the phase shift of the primary circuit. In an embodiment, taking the primary circuit 11 as an example, the relation between the input current ia and the number of the phases of AC power, the voltage of the battery 4, the reactance of the resonant tank and the phase shift φa of the primary circuit 11 may be formulated as:

$$ia = \frac{4N|V_{batt}|}{\pi^2 X} \int_{\theta=0}^{\theta=\pi-\varphi a} \sin(\theta) \, d\theta \qquad (2),$$

where N represent the turns ratio of the transformers TR1, TR2 and TR3, Vbatt represents the voltage of the battery 4, and X represents the reactance of the resonant tank formed by the inductors L1 and L2 and capacitor C21.

Based on equation (2), the measured current value |ia| may be formulated as:

$$|ia| = \frac{4N|V_{batt}|}{\pi^2 X} (1 - \cos(\pi - \varphi a)) \qquad (3).$$

According to equation (3), it can be derived that:

$$\varphi a = \pi - \cos^{-1}\left(1 - \frac{|ia|\pi^2 X}{4N|V_{batt}|}\right) \qquad (4).$$

Namely, the phase shift φa may be calculated based on the measured current value |ia|, the reactance X of the resonant tank, the voltage Vbatt of the battery (i.e., the output voltage of the bidirectional AC-DC power supply 100), and the number of the phases of the AC power.

Similarly, the calculation formulas for the phase shifts φb and φc of the primary circuits 12 and 13 may be derived as:

$$\varphi b = \pi - \cos^{-1}\left(1 - \frac{|ib|\pi^2 X}{4N|V_{batt}|}\right) \qquad (5)$$

$$\varphi c = \pi - \cos^{-1}\left(1 - \frac{|ic|\pi^2 X}{4N|V_{batt}|}\right) \qquad (6).$$

In addition, the current Ibatt of the battery 4 may be calculated as:

$$Ibatt = \frac{8n}{\pi^2 X}\left(|V1|\cos^2\frac{\varphi a}{2} + |V2|\cos^2\frac{\varphi b}{2} + |V3|\cos^2\frac{\varphi c}{2}\right) \qquad (7).$$

According to equation (7), it is evident that the current Ibatt of the battery 4 is a function of the phase voltages V1, V2 and V3. Particularly, the current Ibatt is proportional to the sum of the phase voltages in their harmonic average sense. Additionally, depending on the instantaneous magnitude of the input phase to neutral voltages, the phase shift is accordingly adjusted to result in the equivalent current Ibatt. Note that the expression for the current Ibatt would highly depend on the configuration of the switches of the secondary circuit 2 (e.g., the stacked half-bridge configuration or the full-bridge configuration). Equation (7) is only true for a full bridge configuration.

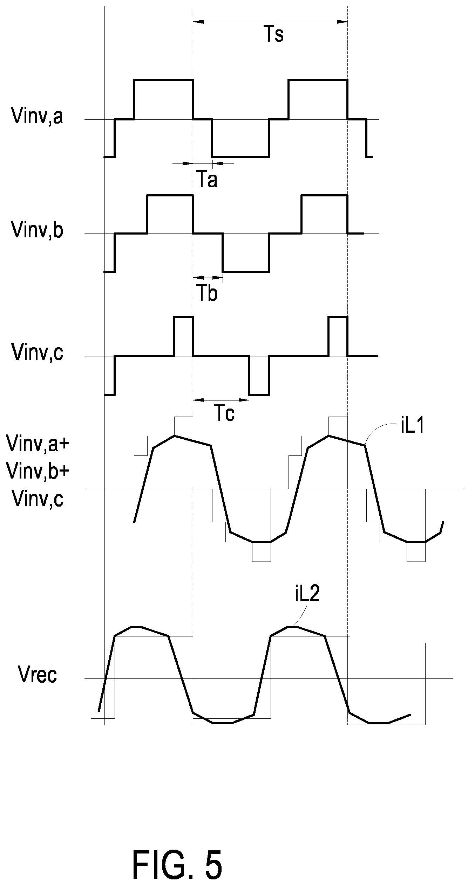

The switch control strategy during the discharging mode is similar with that during the charging mode. Please refer to FIG. 5 in conjunction with FIG. 3A. FIG. 5 schematically shows operating waveforms of the bidirectional AC-DC power supply of FIG. 3A under the discharging mode. Specifically, FIG. 5 shows the waveforms of the voltages Vinv,a, Vinv,b, Vinv,c and Vrec, the sum of the voltages Vinv,a, Vinv,b and Vinv,c, and the currents iL1 and iL2. The main difference between the switch control strategies of the charging and discharging mode is that a lagging-edge synchronization is used in the discharging mode to achieve ZVS and ensure reverse power flow. In particular, the falling edge of the switch control signals of the switches Sa3, Sb3 and Sc3 are synchronous. The lagging-edge synchronization also results in leading current iL1 with respect to the voltages Vinv,a, Vinv,b and Vinv,c of the primary circuits 11, 12 and 13, which ensures the ZVS of the switches of the primary circuits 11, 12 and 13. Moreover, due to the lagging-edge synchronization, the falling edges of the voltages Vinv,a, Vinv,b, Vinv,c in the positive half cycle are synchronous, and the rising edges of the voltages Vinv,a, Vinv,b, Vinv,c in the negative half cycle are synchronous. In addition, the switches of the secondary circuit 2 can also achieve ZVS.

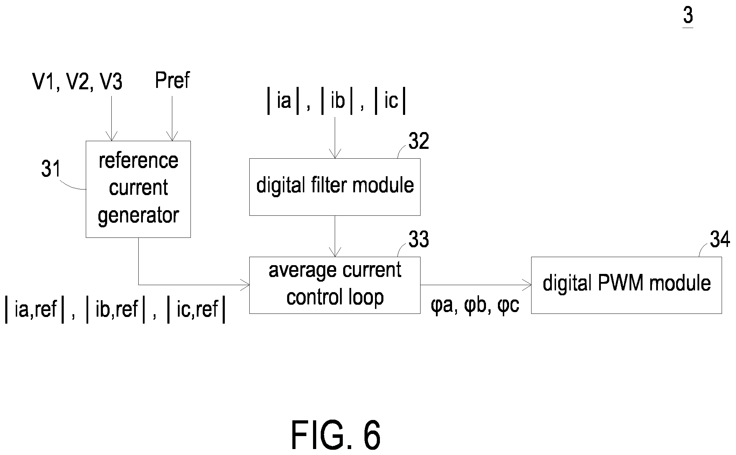

FIG. 6 is a schematic block diagram illustrating the control circuit of the bidirectional AC-DC power supply of FIG. 3A according to an embodiment of the present disclosure. Please refer to FIG. 6 in conjunction with FIG. 3A. The control circuit 3 includes a reference current generator 31, a digital filter module 32, an average current control loop 33, and a digital PWM (pulse width modulation) module 34. The reference current generator 31 receives the phase voltages V1, V2 and V3 of the AC power and an output power reference Pref, and accordingly generates reference currents |ia,ref|, |ib,ref| and |ic,ref| corresponding to the input currents ia, ib and ic of the primary circuits 11, 12 and 13, respectively. The digital filter module 32 receives and digitally filters the measured current values |ia|, |ib| and |ic|. The reference currents |ia,ref|, |ib,ref| and |ic,ref| generated by the reference current generator 31 and the measured current values |ia|, |ib| and |ic| filtered by the digital filter module 32 are provided as inputs to the average current control loop 33. The average current control loop 33 compares the measured current values |ia|, |ib| and |ic| after filtered with the reference currents |ia,ref|, |ib,ref| and |ic,ref| to generate the phase shifts φa, φb and φc. The digital PWM module 34 receives the phase shifts φa, φb and φc and generates the switch control signals for the switches of the primary circuits 11, 12 and 13 and the secondary circuit 2 with a certain gating sequence.

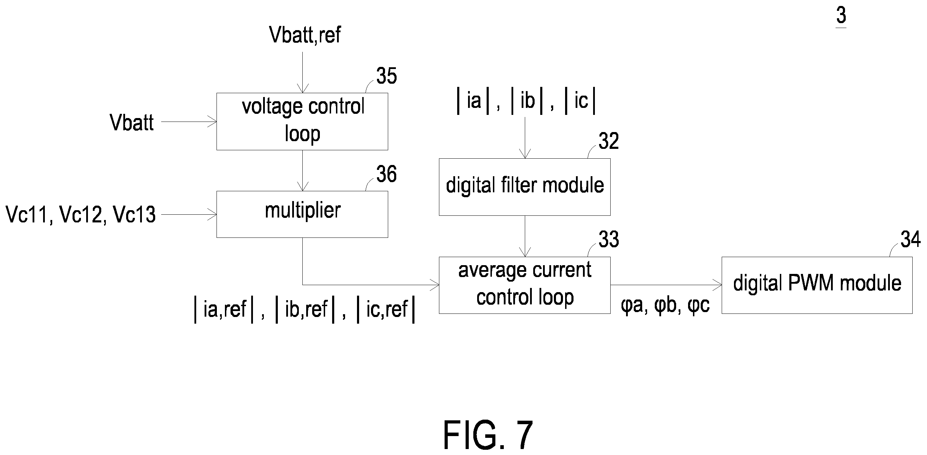

FIG. 7 is a schematic block diagram illustrating the control circuit of the bidirectional AC-DC power supply of FIG. 3A according to another embodiment of the present disclosure. In FIG. 7, the components parts and elements corresponding to those of FIG. 6 are designated by identical numeral references, and detailed descriptions thereof are omitted herein. The difference between the implementations of the control circuit shown in FIG. 6 and FIG. 7 is the manner of generating the reference currents |ia,ref|, |ib,ref| and |ic,ref|. Please refer to FIG. 7 in conjunction with FIG. 3A. In the embodiment shown in FIG. 7, the control circuit 3 includes a voltage control loop 35 and a multiplier 36, which replaces the reference current generator 31 of FIG. 6. The voltage control loop 35 receives the voltage Vbatt of the battery 4 and a corresponding voltage reference Vbatt,ref, and accordingly generates a required multiplication factor. The multiplier 36 multiplies the required multiplication factor generated by the voltage control loop 35 with the measured voltages Vc11, Vc12 and Vc13 across the capacitors C11, C12 and C13 of the primary circuits 11, 12 and 13 to obtain the reference currents |ia,ref|, |ib,ref| and [ic,ref].

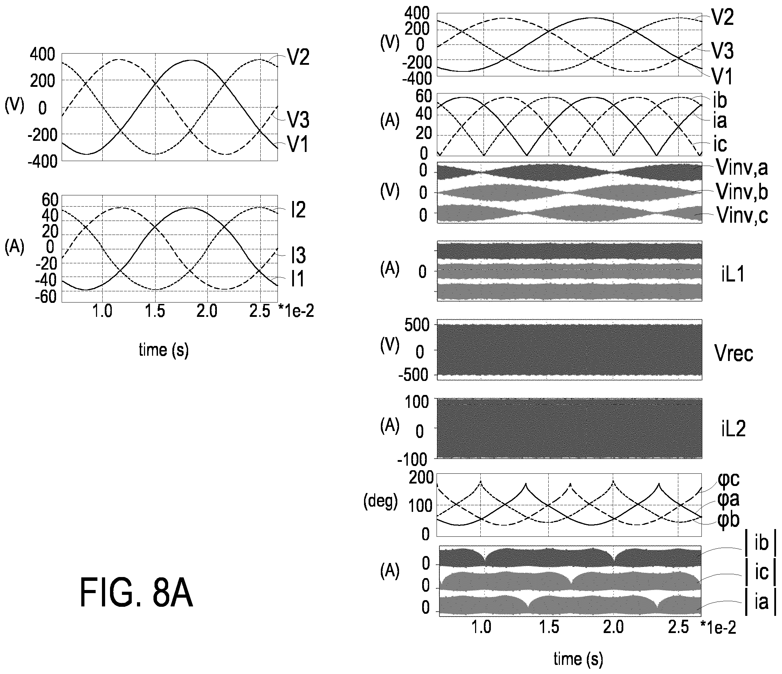

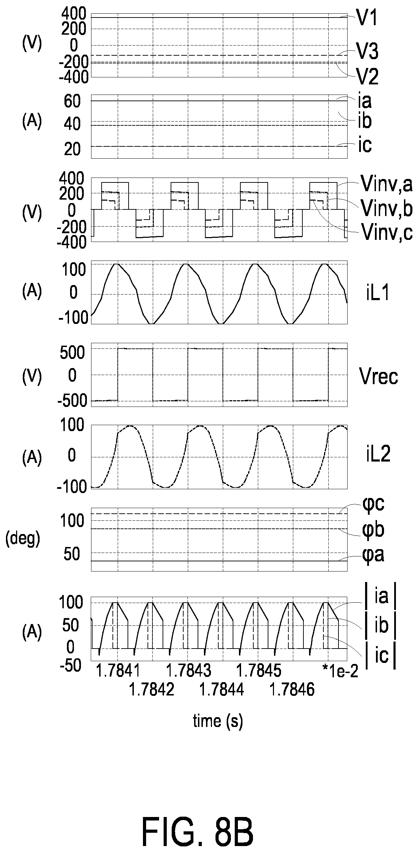

Please refer to FIG. 8A and FIG. 8B in conjunction with FIG. 3A. FIG. 8A and FIG. 8B schematically show the simulation result of the bidirectional AC-DC power supply of FIG. 3A under the charging mode. In particular, FIG. 8A shows the waveforms of the phase voltages V1, V2 and V3 of the AC power, the phase currents I1, I2 and I3 of the AC power, the input currents ia, ib and ic of the primary circuits 11, 12 and 13, the voltages Vinv,a, Vinv,b and Vinv,c of the primary circuits 11, 12 and 13, the currents iL1 and iL2, the voltage Vrec of the secondary circuit 2, and the phase shifts φa, φb and φc of the primary circuits 11, 12 and 13. FIG. 8B shows zoomed-in waveforms of the waveforms of FIG. 8A during 17.841ms to 17.846ms. In the simulation result shown in FIG. 8A and FIG. 8B, it can be seen that the phase with highest instantaneous current delivers the highest power at any given point of time. Further, from the zoomed-in waveforms, it is seen that the phase with highest voltage and current has the lowest phase shift.

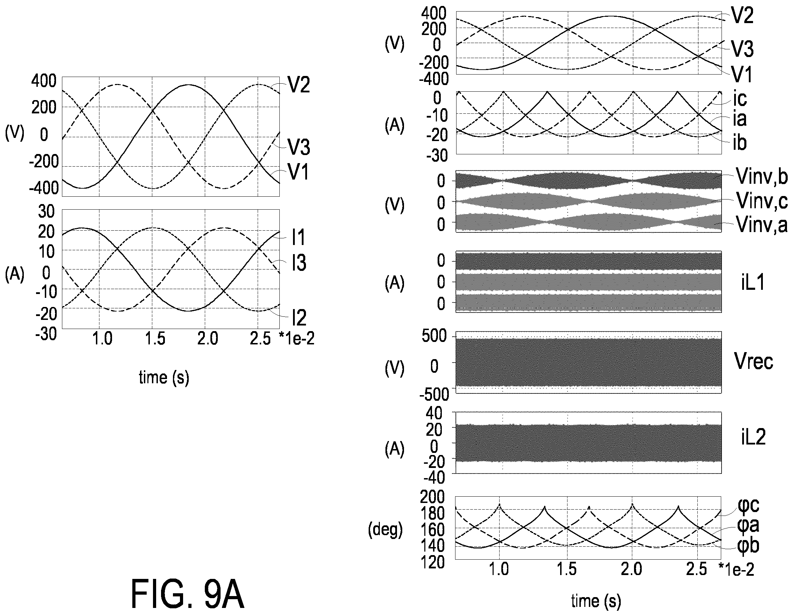

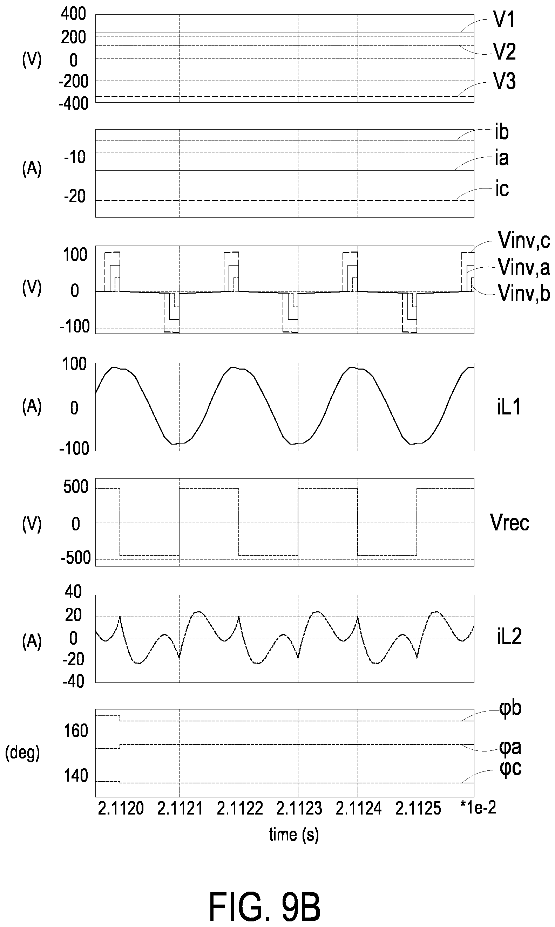

Please refer to FIG. 9A and FIG. 9B in conjunction with FIG. 3A. FIG. 9A and FIG. 9B schematically show the simulation result of the bidirectional AC-DC power supply of FIG. 3A under the discharging mode. In particular, FIG. 9A shows the waveforms of the phase voltages V1, V2 and V3 of the AC power, the phase currents I1, I2 and I3 of the AC power, the input currents ia, ib and ic of the primary circuits 11, 12 and 13, the voltages Vinv,a, Vinv,b and Vinv,c of the primary circuits 11, 12 and 13, the currents iL1 and iL2, the voltage Vrec of the secondary circuit 2, and the phase shifts φa, φb and φc of the primary circuits 11, 12 and 13. FIG. 9B shows zoomed-in waveforms of the waveforms of FIG. 9A during 21.120ms to 21.125ms. In the simulation result shown in FIG. 9A and FIG. 9B, it can be seen that the phase with highest instantaneous current delivers the highest power at any given point of time. Further, from the zoomed-in waveforms, it is seen that the phase with highest voltage and current has the lowest phase shift.

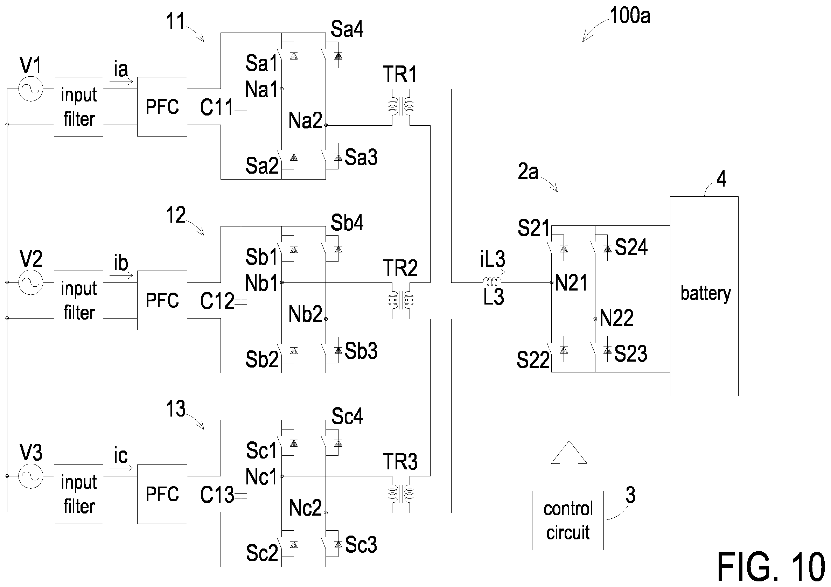

In addition, the topologies of the bidirectional AC-DC power supplies shown in the above embodiments are mainly based on the LCL-T resonant tank, but the present disclosure is not limited thereto. In an embodiment, as shown in FIG. 10, the bidirectional AC-DC power supply 100a may be a dual active bridge (DAB) converter in which the secondary circuit 2a includes an inductor L3 and the switches S21, S22, S23 and S24. The switches S21, S22, S23 and S24 are connected in the full-bridge configuration. The inductor L3 is electrically connected between the secondary winding of the transformer TR1 and the connection node N21 of the switches S21 and S22. The connection node N22 of the switches S23 and S24 is coupled to the secondary winding of the transformer TR3. The bidirectional AC-DC power supply 100a may adopt the same switch control strategy as mentioned above, and also the trend would be similar. Namely, the phase with highest instantaneous current delivers the highest power at any given point of time, and the phase with highest voltage and current has the lowest phase shift. The main difference comes from the fact that with the DAB, an additional control degree of freedom is possible. This additional control variable namely Δφ2 is the phase shift between primary and secondary side pole voltages, can be used to regulate the power flow as well.

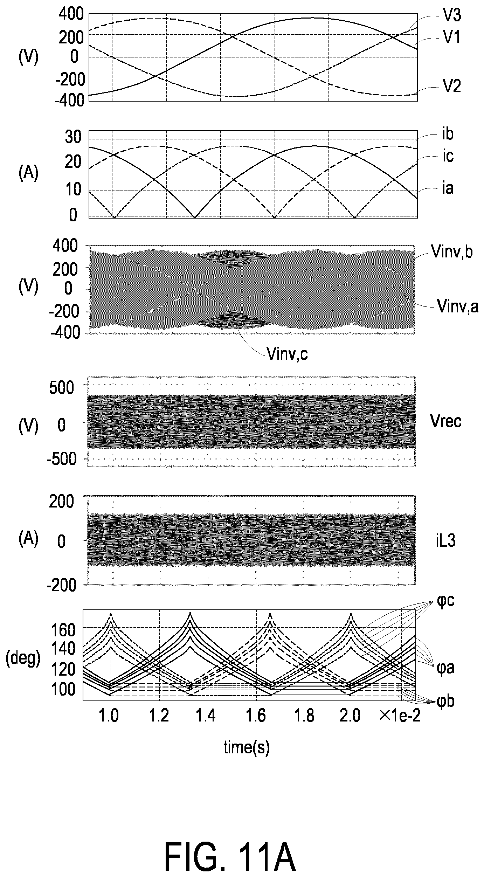

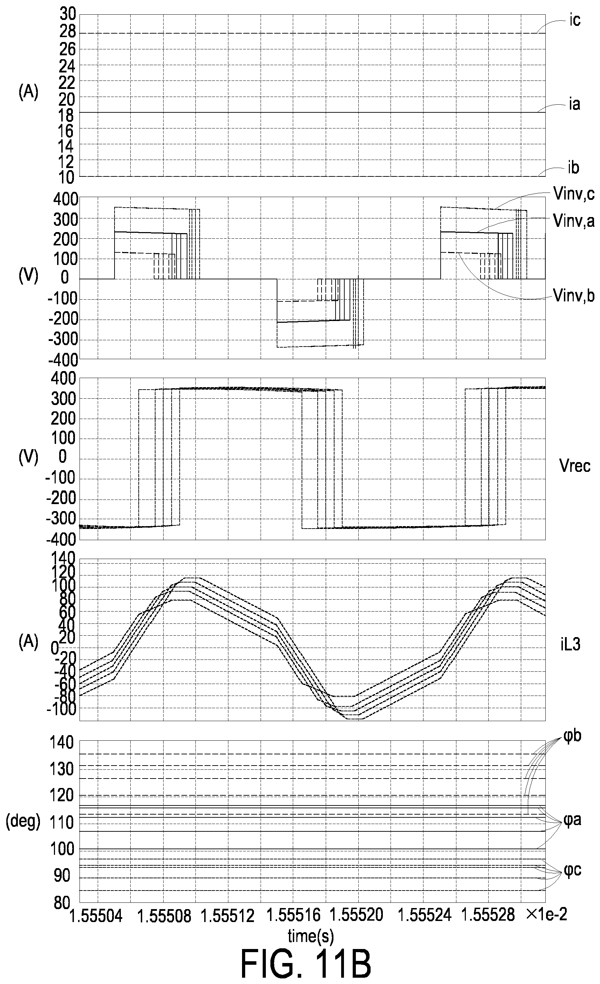

Please refer to FIG. 11A and FIG. 11B in conjunction with FIG. 10. FIG. 11A and FIG. 11B schematically show the simulation result of the bidirectional AC-DC power supply of FIG. 10. In particular, FIG. 11A shows the waveforms of the phase voltages V1, V2 and V3 of the AC power, the phase currents I1, I2 and I3 of the AC power, the input currents ia, ib and ic of the primary circuits 11, 12 and 13, the voltages Vinv,a, Vinv,b and Vinv,c of the primary circuits 11, 12 and 13, the voltage Vrec of the secondary circuit 2a, a current iL3 flowing through the inductor L3, and the phase shifts φa, φb and φc of the primary circuits 11, 12 and 13. FIG. 11B shows zoomed-in waveforms of some waveforms of FIG. 11A during 1.55504ms to 1.55528ms. In the simulation result shown in FIG. 11A and FIG. 11B, the additional control variable (Δφ2) gives a regulation flexibility to the phase shifts φa, φb and φc of the primary circuits 11, 12 and 13, and several possible implementations caused by different Δφ2 are shown in the figures with multiple waveforms. Similarly, it can be seen that the phase with highest instantaneous current delivers the highest power at any given point of time. Further, from the zoomed-in waveforms, it is seen that the phase with highest voltage and current has the lowest phase shift.

Moreover, the specific topology resonant tank included by the secondary circuit may be adjusted according to actual requirement. For example, the resonant tank may be an LCL-T resonant tank (as shown in the above embodiments), a CLC resonant tank or any other suitable resonant tank. In an embodiment, there may be merely an inductor connected between the transformers and the switches of the secondary circuit (FIG. 10). Furthermore, in an embodiment, the resonant tank may be included by the primary circuit rather than the secondary circuit. Similarly, the resonant tank included by the primary circuit may be an LCL-T resonant tank, a CLC resonant tank or any other suitable resonant tank. Alternatively, there may be merely an inductor connected between and the switches of the primary circuit and the corresponding transformer.

**Claims**

1. A bidirectional AC-DC power supply (100), **characterized by** comprising:

a plurality of primary circuits (11, 12, 13), electrically connected to a plurality of phase voltages (V1, V2, V3) of an AC power respectively;
a plurality of transformers (TR1, TR2, TR3), electrically connected to the plurality of primary circuits (11, 12, 13) respectively, wherein a primary winding of each of the plurality of transformers (TR1, TR2, TR3) is coupled to a corresponding one of the plurality of primary circuits (11, 12, 13), and a plurality of secondary windings of the plurality of transformers (TR1, TR2, TR3) are electrically connected in series;
one secondary circuit (2), electrically connected to the plurality of secondary windings of the plurality of transformers (TR1, TR2, TR3); and
a control circuit (3), configured to control switches of the plurality of primary circuits (11, 12, 13) and the secondary circuit (2) to switch under zero voltage by controlling phase shifts of the switches of the plurality of primary circuits (11, 12, 13).

2. The bidirectional AC-DC power supply (100) according to claim 1, wherein when the bidirectional AC-DC power supply (100) receives the AC power by the plurality of primary circuits (11, 12, 13) and provides an DC power by the secondary circuit (2), rising edges of voltages (Vinv,a, Vinv,b, Vinv,c) provided by the plurality of primary circuits (11, 12, 13) in a positive half cycle are synchronous, and falling edges of the voltages (Vinv,a, Vinv,b, Vinv,c) provided by the plurality of primary circuits (11, 12, 13) in a negative half cycle are synchronous.

3. The bidirectional AC-DC power supply (100) according to claim 1 or 2, wherein regarding each of the plurality of primary circuits (11, 12, 13), a time of the voltage (Vinv,a) provided by the primary circuit (11) being at or near zero is equal to a time delay (Ta) caused by the phase shift ($\varphi$a) of the switches of the primary circuit (11).

4. The bidirectional AC-DC power supply (100) according to any one of the above claims, wherein when the bidirectional AC-DC power supply (100) receives an DC power by the secondary circuit (2) and provides the AC power by the plurality of primary circuits (11, 12, 13), falling edges of voltages (Vinv,a, Vinv,b, Vinv,c) received by the plurality of primary circuits (11, 12, 13) in a positive half cycle are synchronous, and rising edges of the voltages (Vinv,a, Vinv,b, Vinv,c) received by the plurality of primary circuits (11, 12, 13) in a negative half cycle are synchronous.

5. The bidirectional AC-DC power supply (100) according to any one of the above claims, wherein regarding any of the plurality of primary circuits (11, 12, 13), a time of the voltage (Vinv,a) received by the primary circuit (11) being at or near zero is equal to a time delay (Ta) caused by the phase shift ($\varphi$a) of the switches of the primary circuit (11).

6. The bidirectional AC-DC power supply (100) according to any one of the above claims, wherein each of the plurality of primary circuits (11, 12, 13) comprises:

a first switch (Sa1) and a second switch (Sa2), electrically connected in series to form a first switch bridge arm, wherein a connection node (Na1) therebetween is coupled to a first terminal of the primary winding of a corresponding transformer (TR1) of the plurality of transformers; and
a third switch (Sa3) and a fourth switch (Sa4), electrically connected in series to form a second switch bridge arm, wherein a connection node (Na2) therebetween is coupled to a second terminal of the primary winding of the corresponding transformer (TR1),
wherein a switch control signal of the first switch (Sa1) is complementary to a switch control signal of the second switch (Sa2), a switch control signal of the third switch (Sa3) is complementary to a switch control signal of the fourth switch (Sa4), and the phase shift ($\varphi$a) of the primary circuit (11) results in a time delay (Ta) between the switch control signal of the first switch (Sa1) and the switch control signal of the third switch (Sa3).

7. The bidirectional AC-DC power supply (100) according to claim 6, wherein when the bidirectional AC-DC power supply (100) receives the AC power by the plurality of primary circuits (11, 12, 13) and provides an DC power by the secondary circuit (2), rising edges of said first switches (Sa1, Sb1, Sc1) of the plurality of primary circuits (11, 12, 13) are synchronous.

8. The bidirectional AC-DC power supply (100) according to claim 6 or 7, wherein when the bidirectional AC-DC power supply (100) receives an DC power by the secondary circuit (2) and provides the AC power by the plurality of primary circuits (11, 12, 13), falling edges of said third switches (Sa3, Sb3, Sc3) of the plurality of primary circuits (11, 12, 13) are synchronous.

9. The bidirectional AC-DC power supply (100) according to any one of the above claims, wherein the secondary circuit (2) comprises a resonant tank electrically connected between the switches (S21, S22, S23, S24) of the secondary circuit (2) and the plurality of secondary windings of the plurality of transformers (TR1, TR2, TR3).

10. The bidirectional AC-DC power supply (100) according to claim 9, wherein regarding any of the plurality of primary circuits (11, 12, 13), the phase shift ($\varphi$a) of the primary circuit (11) is determined according to an input current of the primary circuit (11), a reactance of the resonant tank of the secondary circuit (2), an output voltage of the bidirectional AC-DC power supply (100), and the number of the plurality of phase voltages (V1, V2, V3) of the AC power.

11. The bidirectional AC-DC power supply (100) according to any one of the above claims, wherein the control circuit (3) comprises:

   a digital filter module (32), configured to filter absolute input current values ($|i_a|$, $|i_b|$, $|i_c|$) of the plurality of primary circuits (11, 12, 13);
   an average current control loop (33), configured to generate the phase shifts ($\varphi$a, $\varphi$b, $\varphi$c) for the plurality of primary circuits (11, 12, 13) by comparing the absolute input current values ($|i_a|$, $|i_b|$, $|i_c|$) filtered by the digital filter module (32) with references ($|i_{a,ref}|$, $[i_{b,ref}]$, $|i_{c,ref}|$) of the absolute input current values; and
   a digital pulse width modulation module (34), configured to generate switch control signals for the switches of the plurality of primary circuits (11, 12, 13) and the secondary circuit (2) according to the phase shifts ($\varphi$a, $\varphi$b, $\varphi$c) generated by the average current control loop (33).

12. The bidirectional AC-DC power supply (100) according to any one of the above claims, wherein each of the plurality of primary circuits (11, 12, 13) comprises a resonant tank electrically connected between the switches of the primary circuit (11) and the primary winding of a corresponding one of the plurality of transformers (TR1).

13. The bidirectional AC-DC power supply (100) according to any one of the above claims, wherein each of the plurality of primary circuits (11, 12, 13) comprises a full-bridge converter or a stacked half-bridge converter.

14. The bidirectional AC-DC power supply (100) according to any one of the above claims, wherein the secondary circuit (2) comprises a full-bridge converter or a stacked half-bridge converter.

15. The bidirectional AC-DC power supply (100) according to any one of the above claims, wherein among the plurality of primary circuits (11, 12, 13), the primary circuit with a higher current delivers a larger power and has a smaller phase shift.

FIG. 1 PRIOR ART

FIG. 2

FIG. 3A

FIG. 3B

FIG. 3C

FIG. 3D

FIG. 4A

FIG. 4B

FIG. 4C

Vinv,a

Ts

Ta

Vinv,b

Tb

Vinv,c

Tc

Vinv,a+
Vinv,b+
Vinv,c

iL1

iL2

Vrec

FIG. 5

EP 4 664 739 A1

3

FIG. 6

EP 4 664 739 A1

3

Vbatt,ref

```
                    ┌──────────────────┐ 35
Vbatt ──────────────│  voltage control │
                    │       loop       │
                    └──────────────────┘
                             │
                             ▼                    │ia│, │ib│, │ic│
                    ┌──────────────────┐ 36              │
Vc11, Vc12, Vc13 ───│    multiplier    │              ▼
                    └──────────────────┘      ┌──────────────────┐ 32
                             │                │digital filter module│
                             │                └──────────────────┘
                             │                         │
                             │                         ▼
│ia,ref│, │ib,ref│, │ic,ref│ │            ┌──────────────────┐ 33                    ┌──────────────────┐ 34
                             └───────────▶│ average current  │ φa, φb, φc ──────────▶│ digital PWM module │
                                          │  control loop    │                       └──────────────────┘
                                          └──────────────────┘
```

FIG. 7

FIG. 8A

FIG. 8B

EP 4 664 739 A1

FIG. 9A

FIG. 9B

FIG. 10

FIG. 11A

FIG. 11B

Europäisches
Patentamt

European
Patent Office

Office européen
des brevets

**EUROPEAN SEARCH REPORT**

**Application Number**

EP 25 18 2386

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WANG BOCHUAN ET AL: "A Bidirectional Semi-Modular Isolated Matrix-Type AC/DC Converter", 2022 POWER SYSTEM AND GREEN ENERGY CONFERENCE (PSGEC), IEEE, 25 August 2022 (2022-08-25), pages 1128-1132, XP034187285, DOI: 10.1109/PSGEC54663.2022.9881173 [retrieved on 2022-09-20] * abstract * * Section II. Main Circuit and Operating Principle; figure 1 * | 1-15 | INV. H02M1/00 H02M1/12 H02M1/42 H02M3/00 H02M3/335 |
| Y | XIAO YUDI ET AL: "A Partially Parallel Three Level Neutral Point Clamped dc-dc Converter for Applications with High and Wide Input Voltage", 2021 IEEE 12TH ENERGY CONVERSION CONGRESS & EXPOSITION - ASIA (ECCE-ASIA), IEEE, 24 May 2021 (2021-05-24), pages 624-631, XP033940773, DOI: 10.1109/ECCE-ASIA49820.2021.9479076 [retrieved on 2021-07-08] * abstract * * Section II. Basic Operation of the P2TLNPC Converter; figures 2, 4, 5 * | 1-15 | |

-----

-----

-/--

TECHNICAL FIELDS
SEARCHED     (IPC)

H02M

The present search report has been drawn up for all claims

| Place of search | Date of completion of the search | Examiner |
|---|---|---|
| The Hague | 6 October 2025 | Van der Meer, Paul |

EPO FORM 1503 03.82 (P04C01)

Europäisches
Patentamt

European
Patent Office

Office européen
des brevets

# EUROPEAN SEARCH REPORT

**Application Number**

EP 25 18 2386

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | ZHANG ZHE ET AL: "GaN-Based 1-MHz Partial Parallel Dual Active Bridge Converter With Integrated Magnetics", IEEE TRANSACTIONS ON INDUSTRIAL ELECTRONICS, IEEE SERVICE CENTER, PISCATAWAY, NJ, USA, vol. 68, no. 8, 10 July 2020 (2020-07-10), pages 6729-6738, XP011852452, ISSN: 0278-0046, DOI: 10.1109/TIE.2020.3007078 [retrieved on 2021-04-30] | 1,13 | |
| A | * abstract * * Section I. Introduction; figures 3, 4, 14 * ----- | 2-12,14, 15 | |
| | | | **TECHNICAL FIELDS SEARCHED (IPC)** |

The present search report has been drawn up for all claims

| Place of search | Date of completion of the search | Examiner |
|---|---|---|
| The Hague | 6 October 2025 | Van der Meer, Paul |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

**Non-patent literature cited in the description**

- **Y. JANG** ; **M. M. JOVANOVIC** ; **J. M. RUIZ**. The single-stage TAIPEI rectifier. *2013 Twenty-Eighth Annual IEEE Applied Power Electronics Conference and Exposition (APEC), Long Beach, CA, USA*, 2013, 1042-1049
- **X. LI** ; **J. SUN** ; **L. GUO** ; **M. GAO** ; **H. HU** ; **M. XU**. A Three-Phase Single-Stage ac/dc Converter Based on Swiss Rectifier and Three-Level LLC Topology. *IEEE Transactions on Power Electronics*, February 2023, vol. 38 (2), 1958-1972
- **B. ZHANG** ; **S. XIE** ; **Z. LI** ; **P. ZHAO** ; **J. XU**. An Optimized Single-Stage Isolated Swiss-Type AC/DC Converter Based on Single Full-Bridge With Midpoint-Clamper. *IEEE Transactions on Power Electronics*, October 2021, vol. 36 (10), 11288-11297
- **S. Y R. HUI** ; **H. CHUNG** ; **Y. K. E. HO** ; **Y. S. LEE**. Modular development of single-stage 3-phase PFC using single-phase step-down converters. *PESC 98 Record. 29th Annual IEEE Power Electronics Specialists Conference (Cat. No.98CH36196), Fukuoka, Japan*, 1998, vol. 1, 776-782

- **D. MENZI** ; **D. BORTIS** ; **J. W. KOLAR**. A New Bidirectional Three-Phase Phase-Modular Boost-Buck AC/DC Converter. *2018 IEEE International Power Electronics and Application Conference and Exposition (PEAC), Shenzhen, China*, 2018, 1-8
- **S. -Y CHEN** ; **Z. R. LI** ; **C. -L. CHEN**. Analysis and Design of Single-Stage AC/DC $LLC$ Resonant Converter. *IEEE Transactions on Industrial Electronics*, March 2012, vol. 59 (3), 1538-1544
- **M. FOROUZESH** ; **Y. -F. LIU** ; **P. C. SEN**. Implementation of an Isolated Phase-Modular-Designed Three-Phase PFC Rectifier Based on Single-Stage LLC Converter. *2021 IEEE Energy Conversion Congress and Exposition (ECCE), Vancouver, BC, Canada*, 2021, 2266-2273